# EUROPÄISCHE PATENTSCHRIFT

(11) **EP 2 754 700 B1**
(45) Veröffentlichungstag und Bekanntmachung des Hinweises auf die Patenterteilung: **27.07.2016**
(21) Anmeldenummer: 13003475.4
(22) Anmeldetag: 09.07.2013
(51) Int. Cl.: C09D 5/00

(54) **Lacksystem für explosionsgefährdete Bereiche hoher korrosiver Belastung**
Paint system for areas subject to risk of explosion with a high corrosive load
Système de laque pour zones à risque d'explosion à haute charge corrosive

(30) Priorität: 11.01.2013 DE 202013000271 U; 13.06.2013 DE 102013009933
(43) Veröffentlichungstag der Anmeldung: 16.07.2014
(73) Patentinhaber: Vestocor GmbH, 45356 Essen (DE)
(72) Erfinder: Döring, Roland H., 46242 Bottrop (DE); Döring, Birgit, 46242 Bottrop (DE); Trültzsch, Rainer, Dr., 01640 Coswig (DE)
(74) Vertreter: Creutz, Dieter

(56) Entgegenhaltungen:
- EP-A1- 0 693 323
- WO-A1-2005/123849
- WO-A1-2009/047076
- WO-A2-02/38689
- US-A1- 2005 131 151

## Beschreibung

Die Erfindung betrifft ein Lacksystem für explosionsgefährdete Bereiche und Bereiche hoher korrosiver Belastung, insbesondere für Anlagen oder Anlagenteile der Öl-und Gasindustrie, mit einer definierten Schichtfolge aus drei Einzelschichten, wobei die Grundbeschichtung, die Zwischenbeschichtung und die Deckbeschichtung jeweils auf Basis von 2K-Epoxidharz oder 1 K- bzw. 2K Polyacrylatharz/Polyisocyanat (1 K- bzw. 2K-PUR) oder Alkydharz oder Acrylharz- oder Vinylgruppenhaltigen Polymeren oder beliebigen Kombinationen von Alkydharzen oder Acrylharzen oder Vinylgruppenhaltigen Polymeren, bestehen.

Bei der Lieferung von Anlagen oder Anlagenteilen vorzugsweise an die Öl- und Gas-industrie wird verlangt, dass diese sehr oft der ATEX- Norm (EEx-Klasse II c) entsprechen.

Beim Einsatz in solchen explosionsgefährdeten Bereichen ist darauf zu achten, dass auch bei der Farbgebung, die normalerweise isolierend wirkt, ein Oberflächenwiderstand des ausgehärteten Filmes von < 1 GΩ nicht überschritten wird.

Der Sinn liegt in der Ableitung von jeglicher elektrostatischer Aufladung, die bei Betreten, Reibung durch Textilien, Luftbewegung, von anderen Medien etc. an nicht leitenden Oberflächen entsteht (Vermeidung von Funkenbildung durch Entladung).

Bisher wird das Problem durch eine Begrenzung der Schichtdicke der Beschichtung auf maximal 200 µm trocken gelöst, wobei eine Schichtfolge von 2-3 Schichten üblich ist.

Damit ist ein Oberflächenwiderstand von < 1 GΩ im ausgehärteten Film in der Regel noch zu gewährleisten.

Für Bereiche mit mittlerer bis höherer korrosiver Belastung (Korrosivitätskategorie C4 hohe Schutzdauer gemäß DIN ISO 12944) ist diese maximal vorgegebene Schichtdicke ausreichend, wenn leistungsfähige und hochwertige Beschichtungssysteme eingesetzt werden.

Für Bereiche mit hoher bzw. höchster korrosiver Belastung (Korrosivitätskategorie C5-I bzw. C5-M hohe Schutzdauer gemäß DIN ISO 12944) ist diese Schichtdicke bzw. Auslegung nicht ausreichend. Zunehmend werden solche Anlagen Off Shore installiert, was der Korrosivitätskategorie C5-M gemäß DNI EN ISO 12944 entspricht.

Bisher gab es dafür keine technische Lösung, die den Anforderungen aus Ex-Schütz Richtlinien und Korrosionsschutzanforderungen gleichzeitig gerecht wird. Insbesondere dann nicht, wenn die Deckbeschichtung dekorativen, farblich attraktiven Anforderungen Rechnung tragen und lichtecht bzw. witterungsbeständig sein muss.

Der Einsatz elektrisch leitfähiger Pigmente ist aus vielen Anwendungsgebieten bekannt. So werden diese beispielsweise für antistatische Ausrüstungen explosionsgeschützter Räume, antistatische Beschichtungen und als elektrisch leitfähige Grundierung für das Lackieren von Kunststoffen eingesetzt.

Überwiegend werden dazu Ruß oder Graphit genutzt, um die Leitfähigkeit der Materialien zu erhöhen. Ruß oder Graphit als leitfähiges Pigment versagt aber, wenn die Forderung besteht, dass die Oberflächen Transparenz aufweisen sollen und nicht lediglich eine dunkelgefärbte Oberfläche.

Aus der EP 2 366 767 A2 ist der Einsatz von einem oder mehreren transparenten elektrisch leitfähigen Pigmenten bekannt, die für transparente elektrisch leitfähige Fußbodenpflegemittel, insbesondere für antistatische Fußböden gedacht sind.

Mit der EP 2 366 767 A2 sollen Pflege- und Reinigungsmittel geschaffen werden, die in der Lage sind sehr helle und transparente Pflegefilme zu erzeugen, die die antistatischen Eigenschaften der Fußbodenbeläge nur im geringen Ausmaß beeinträchtigen.

Der Einsatz der hier vorgeschlagenen transparenten, elektrisch leitfähigen Pigmente allein, reicht nicht aus, um für Lacksysteme, neben der geforderten Transparenz, höchste korrosive Belastungen zu gewährleisten.

Nach der EP 0 693 323 A1 wird die elektrostatische Beschichtung von Kunststoffsubstraten beschrieben, wobei die erfindungsgemäß beanspruchte Zweischicht-Grundierung aus einer nichtleitenden, chromatisch pigmentierten Grundierung und einer relativ dünnen leitfähigen transparenten zweiten Schicht besteht. Zudem wird beansprucht einen leitenden Primer, farblich so abgestimmt einzusetzen, dass die den Farbton leicht verändernde Transparenz der Deckschicht Berücksichtigung findet.

Aufgabe der vorliegenden Lösung ist es, ein preiswertes Zweischicht-Primer-System für die elektrostatische Verarbeitung zur Beschichtung von Kunststoff-Teilen bereitzustellen, in denen die Abdeckung des Substrates mit einer farbigen nicht leitenden ersten Schicht bewerkstelligt und die Leitfähigkeit durch einen dünnen durchscheinenden Überzug, das leitfähige Pigment enthaltend, realisiert wird. Zudem soll ein im Endfarbton formulierter Primer (Basecoat) für elektrostatisch beschichtete Kunststoffteilen geschaffen und die Nass-in-Nass Lackierung mit einem transparenten Decklack realisiert werden. Wesentlich für die Erfindung ist danach das Aufbringen einer lichtdurchlässigen leitfähigen Deckbeschichtung auf die nasse Oberfläche des nichtleitfähigen Grundes und das Einbrennen des gesamten beschichteten Substrates.

Die US 2005/01311 51 A1 beschreibt eine Haftvermittler-Zusammensetzung, die ein Olefin-basierendes Polymer oder Block-Copolymer oder eine Mischung davon ist, umfassend adhäsionsfördernde funktionelle Gruppen, die nicht mit einem Grundharz oder Vemetzungsharz in einer Beschichtungszusammensetzung und einer Beschich*tungszusammensetzung* reagieren.
Die betreffenden Haftvermittler und härtbaren Beschichtungszusammensetzungen stellen insbesondere Zusammensetzungen dar, die auf olefinischen Substraten, insbesondere thermoplastisches Polyolefin (TPO) -Substraten aufgebracht werden.

Als Substrate für die Haftvermittler kommen ausschließlich Kunststoffe auf olefinischer Basis (thermoplastisches Polyolefin) zum Einsatz, was wiederum mit dem zum Substrat passenden Haftvermittler (Polymer auf Olefinbasis) korrespondiert.

Nach der WO 02/38689 A2 wird eine Zusammensetzung, die ein chloriertes Polyolefin und ein auf Olefin basierende Blockcopolymer, das einen Olefin-Block, der im Wesentlichen gesättigt ist und mindestens einen (Poly) ester oder (Poly) ether-Block enthält, beschrieben.

Die erfindungsgemäße Zusammensetzung soll geeignet sein einem Haftvermittler eine hervorragende Haftung an olefinischen Substraten wie TPO, zu ermöglichen, selbst wenn sie in sehr geringen Mengen verwendet wird. Danach wird die erfindungsgemäße Haftvermittler- Zusammensetzung direkt auf das olefinische Substrat aufgebracht, ohne dass dadurch bereits eine Schicht im Sinne eines Lackschichtsystems erzeugt wird. Die Haftvermittler- Zusammensetzung reagiert vielmehr unmittelbar mit dem Substrat, um eine Haftung auf dem Polyolefin zu ermöglichen.

Sämtliche zitierten Patentschriften vermitteln Lösungen, die auf Kunststoffoberflächen aufgebracht werden. Insoweit lassen sich daraus keine Lösungsansätze finden, die Lacksystem auf metallischen Untergründen betreffen und die zum Zwecke des Korrosionsschutzes, bei gleichzeitig hoher Leitfähigkeit, aufgebracht werden sollen.

Nach der WO 2009/047076 A1 wird eine mit Fluoreszenzfarbstoffen markierte, pigmentfreie, wässrige Polymerdispersion, beschrieben, die ohne großen Energieaufwand zu handhaben, insbesondere zu pumpen ist, ohne das es zu Ausflockungen kommt, wodurch eine Bevorratung ermöglicht wird und deren Einsatz nach Bedarf an unterschiedlichen Orten zu unterschiedlichen Verwendungszwecken gewährleistet werden kann.

Die so entwickelte Polymerdispersion kann bei der Herstellung von funktionalen Produkten, wie Beschichtungsstoffen, Klebstoffen, Dichtungsmassen, Druckfarben, Papierstreichmassen oder Papierleimungsmittel eingesetzt werden, um dabei einen Mischungsschritt einzusparen. Mit effektgebenden Zusatzstoffen, insbesondere effektgebenden Pigmenten lassen sich diese auf einfache Weise mit den mit Fluoreszenzfarbstoffen markierten, pigmentfreien, wässrigen Polymerdispersion vermischen, ohne dass es zu Ausflockungen von Bestandteilen kommt. Diese können mit Vorteil für die Herstellung markierter, flüssiger, fester pulverförmiger und fester kompakt funktionaler Produkte, eingesetzt werden.

Die vorgeschlagene Lösung ist allerdings nicht für den Einsatz als Lacksystem zum Zweck des Korrosionsschutzes, bei gleichzeitig hoher Leitfähigkeit und hoher Schichtdicke, auf metallischen Untergründen geeignet.

Aus der WO 2005/123849 A1 ist eine elektrisch leitfähige und elektrisch schweißbare Korrosionsschutzzusammensetzung zur Beschichtung von Metalloberflächen und ein Verfahren zur Beschichtung von Metalloberflächen mit elektrisch leitfähigen organischen Beschichtungen sowie entsprechend beschichtete und gegebenenfalls überlackierte Metallbänder, -bleche oder -teile bekannt.

Mit der vorliegenden Lösung soll eine verbesserte Beschichtungszusammensetzung bereitgestellt werden, die den Anforderungen der Automobilindustrie in allen Punkten genügt. Im Vergleich zum bekannten Stand der Technik sollen die für das CoilCoating-Verfahren geeigneten organischen Beschichtungszusammensetzungen in zumindest einigen Eigenschaften verbessert werden.

Das organische Bindemittel ist so gewählt, dass es durch Einwirkung von energiereicher Strahlung aushärtbar ist. Damit das organische Bindemittel diese Eigenschaft aufweist, enthält es vorzugsweise mindestens ein radikalisch polymerisierbares Harz, vorzugsweise ein Polyester-, Urethan- oder epoxy-modifiziertes ( Meth )acrylatharz, oder eine Mischung hierzu, mindestens einen Reaktivverdünner und mindestens einen Photoinitiator.

Es werden Korrosionsschutzpigmente und/oder Korrosionsinhibitoren in einer Menge von bis zu 15 Gew.-% verwendet.

Als Leitfähigkeitspigment wird ein Pulver einer elektrisch leitfähigen Substanz oder eines Substanzgemisches, das es erlaubt, die beschichteten Metalloberflächen elektrisch zu verschweißen und elektrophoretisch zu lackieren, eingesetzt.

Die Korrosionsschutz-Zusammensetzung wird mit einer Nassfilmdicke auf die Metalloberflächen aufgetragen, wodurch nach dem Aushärten eine Schichtdicke im Bereich von etwa 0,5 bis 10 µm, vorzugsweise 4 µm bis 6 µm entsteht. Die Applikation der Korrosionsschutz-Zusammensetzung erfolgt im Allgemeinen bei Temperaturen zwischen 0 und 90 °C, bevorzugt 15 bis 70°C und insbesondere 40 bis 60°C. Danach wird der Überzug durch energiereiche Strahlung (z.B. UV Strahlung)vernetzt. Die Aushärtung der aufgebrachten Beschichtung erfolgt in einer Zeitdauer von 0,001 bis 300 Sekunden.

Es werden weitere Möglichkeiten zur Herstellung eines Beschichtungssystems aus mehreren Einzelschichten als Varianten aufgezeigt. So werden auf die erfindungsgemäße organische Korrosionsschutz -Beschichtung ein Elektrotauchlack und anschließend ein ein- oder zweischichtiger Decklack aufgebracht. Der Elektrotauchlack wird dazu mit einer Dicke von 25 bis 35 µm ausgeführt.

Bei zweischichtiger Ausführung des Decklackes besteht dieser aus einem sog. Base-coat, der vor allem für den optischen Eindruck des Beschichtungssystems sorgt, und einem Clearcoat, der im wesentlichen Schutzfunktion hat und durch den der Base-coat sichtbar ist.

Die vorliegende Lösung stellt demnach eine für das Coil- Coating Verfahren in der Automobilindustrie geeignete Beschichtungszusammensetzung dar. Die betreffende Schicht soll einen temporären Korrosionsschutz ermöglichen, d.h. die Bleche werden nur mit dem Ziel geschützt, später weiterverarbeitet zu werden und ein nachfolgendes Punktschweißen zu ermöglichen.

Nachteil dieser Lösung ist, dass die so erzeugte elektrisch leitfähige und elektrisch schweißbare Korrosionsschutzzusammensetzung zur Erzeugung einer Lackschicht mit hoher Gesamtschichtdicke zum Erzielen eines dauerhaften Korrosionsschutzes, bei gleichzeitig höchster Leitfähigkeit des Schichtenaufbaues, nicht geeignet ist.

Aufgabe der Erfindung ist es daher, für Bereiche mit hoher bzw. höchster korrosiver Belastung, bei gleichzeitiger Einhaltung der Ex- Schutz-Richtlinien, Deckbeschichtungen zu entwickeln, die farblichen attraktiv gestalteten Anforderungen entsprechen.

Die Aufgabe wird entsprechend den erfinderischen Merkmalen des Hauptanspruches gelöst. Besondere vorteilhafte Ausgestaltungen der Erfindung sind in den Unter-ansprüchen ausgeführt.

Danach enthält die Grundbeschichtung und die Zwischenbeschichtung jeweils leitfähige Pigmente, die Deckbeschichtung hingegen unlösliche, transparente, leitfähige Pigmente.

Die Gesamtschichtdicke aller drei Einzelschichten liegt erfindungsgemäß zwischen 200 µm bis 400 µm und es wird ein Oberflächenwiderstand unter 1 GΩ eingehalten.

Es hat sich nun gezeigt, dass die Kombination dieser unterschiedlichen Pigmente, sowohl einerseits in der Grundbeschichtung und der Zwischenbeschichtung, als auch andererseits in der Deckbeschichtung, zur Lösung dieser Aufgabe erfindungswesentlich ist.

Die Deckbeschichtung wird wegen der Farbgebung im RAL, NCS, British Standard, Munsell o.ä. nur mit den in den Patentansprüchen beschriebenen unlöslichen, transparenten und leitfähigen Pigmenten versetzt.

Für die erfindungsgemäße Lösung ist es dabei auch wesentlich, dass bei der Beschichtung eine definierte Schichtfolge aus den genannten drei Einzelschichten eingehalten wird und dass die Gesamtschichtdicke aller drei Einzelschichten größer 200 µm bis ca. 400 µm beträgt.

Der Schichtenaufbau aus den drei Einzelschichten in Verbindung mit den jeweils erfindungsgemäß eingesetzten Pigmenten bewirkt, dass der Oberflächenwiderstand unter 1 GΩ liegt und somit eine durchgehend hohe bis höchste Leitfähigkeit des Lacksystems gewährleistet ist, so dass damit Ex - Schutzrichtlinien erfüllt werden können.

In bevorzugter Weise werden für die Grund-, Zwischen- und Deckbeschichtung als Bindemittel jeweils PVC- Copolymere, 2 K -Epoxidharz, 1K-PUR-Harz und 2-K PUR-Harz eingesetzt.

Als Deckbeschichtung hat sich als besondere Lösung der Einsatz von 1K-PUR Beschichtungsstoff mit aliphatischen bzw. aromatischen Isocyanaten oder ein 2K-PUR Beschichtungsstoff oder einem 1 K-modifizierten Acrylharzbeschichtungsstoff herausgestellt. Diese sind in erfindungsgemäßer Weise mit transparenten, leitfähigen und unlöslichen Pigmenten versetzt.

Es besteht eine Abhängigkeit des Oberflächenwiderstandes von der Schichtstärke der Grundierung, der Zwischenbeschichtung und auch der Deckbeschichtung.

Die Gesamtschichtstärke kann bis 400 µm betragen. Voraussetzung ist, dass die Deckbeschichtung im Schichtstärkenbereich von ca. 60 µm bis 100 µm trocken bleibt.

Als bevorzugte Bindemittel kommen solche Materialien zum Einsatz, die aus Zweikomponenten-Materialien bzw. in der Deckbeschichtung auch aus lichtbeständigem 1 K-Acrylatharz bestehen.

Vorteilhaft für die Lösung der erfindungsgemäßen Aufgabenstellung hat sich der Einsatz von den im Patentanspruch beschriebenen leitfähigen Pigmenten oder anderen leitfähigen Pigmenten wie Zinkstaub, Aluminium oder Eisenglimmer in der Grundierung und Zwischenbeschichtung erwiesen.

So ist die 2K-EP- oder 1K- bzw. 2K-PUR- Grundbeschichtung erfindungsgemäß wahlweise mit Zinkstaub, mit Zinkphosphat, mit Zinkphosphat /Calciumphosphat, mit Calciumphosphat/Strontiumphosphat oder mit Calciumphosphat/Zinkphosphat/Zinkoxid oder Kombinationen aus diesen sowie Füllstoffen, wie Bariumsulfat, Talkum oder Kombinationen aus diesen, versetzt. Die Grundbeschichtung auf Basis 2K- Epoxidharz mit Zinkstaub ist nach Sollwert 80 µm stark und leitend.

Die 2K- EP oder 1K- bzw. 2K-PUR Zwischenbeschichtung ist wahlweise mit Eisenglimmer oder/und Mica Glimmer, sowie Füllstoffen, wie Bariumsulfat, Talkum oder Kombinationen aus diesen, versetzt. Die Zwischenbeschichtung ebenfalls auf Basis 2K-Epoxidharz mit Eisenglimmer und Aluminium ist 180 µm stark und leitet ebenfalls den elektrischen Strom.

Erfindungsgemäß enthält die Deckbeschichtung ein transparentes, leitfähiges und unlösliches Pigment.
Die Deckbeschichtung auf Basis 2K-Polyurethanharz ist in üblicher Ausführung 60 µm nicht leitend, also isolierend (Gesamtschichtdicke 320 µm). Derartige Pigmente setzen sich aus einem Substrat und einer elektrisch leitfähigen Schicht zusammen.

Bevorzugt ist, dass das Substrat aus plättchenförmigen Partikeln, sphärischen Partikel oder deren Gemischen besteht.

Eine Zusammensetzung nach der das plättchenförmiges Substrat aus Glimmer, synthetischem Glimmer, SiO₂, Glas- oder Keramikflakes oder einem Perlglanzpigment besteht, ist ein wichtiges Mittel der Wahl.
Besteht das Substrat aus sphärischen Partikeln, so setzen sich diese aus Al₂O₃-, BaSO₄- oder SiO₂-Partikeln zusammen

Besteht das Pigment aus Glimmer, so ist es vorteilhaft, ein nach dem Stand der Technik bekanntes Produkt, dass eine TiO₂-Beschichtung aufweist, die mit einer mit Antimon dotierten Zinnoxid-Schicht [(Sn,Sb)O2] belegt ist, einzusetzen.

Die erfindungsgemäße Deckbeschichtung auf Basis Polyurethanharz muss in allen denkbaren RAL, NCS, British-Standard, Munsell- und anderen relevanten Farbnormen lieferbar sein.

Dies wird erreicht, indem in bevorzugter Weise der Gehalt an Pigmenten in der Deckbeschichtung, bezogen auf die Gesamtformulierung zwischen 2- 40 Gewichts-% liegt.

Bei dieser Zusammensetzung wird erreicht, dass der Farbton nur ganz geringfügig bis gar nicht verändert und somit das Spektrum der zu liefernden Farbtöne abdeckt wird.

Mit den erfindungsgemäß beanspruchten Pigment kann die Leitfähigkeit der Deckbeschichtung im ausgehärteten Zustand soweit verbessert werden, dass der Oberflächenwiderstand (gemessen bei einer Spannung von 100 bzw. 500 V und Schichtdicken bis 100 µm trocken für die Deckbeschichtung -gesamt 360 µm-) noch zuverlässig unter der Widerstands-Grenze von 1 GΩ bleibt.

Die Deckbeschichtung ist daher, ohne das erfindungsgemäß beanspruchte Pigment, auf Grund ihrer Zusammensetzung, nicht leitend. Gleichzeitig ist der erfindungsgemäße Pigmentzusatz unlöslich und beeinträchtigt die Korrosionsschutzeigenschaften und die Witterungsbeständigkeit der Deckbeschichtung nicht negativ.

Durch diese erfindungsgemöße Zusammensetzung eines dem Grunde nach dem Stand der Technik entsprechenden und bekannten Schichtaufbaus, in Kombination mit unlöslichen, transparenten, leitfähigen Pigmenten in der Deckbeschichtung und jeweils leitfähigen Pigmenten in der Grund- und Zwischenbeschichtung, lässt sich die bekannte Witterungsbeständigkeit und Farbtonvielfalt von 2K-PUR Deckbeschichtungen, bei gleichzeitiger Berücksichtigung von höchsten Korrosionsschutzanforderungen (höhere Trockenschichtdicken), mit der Notwendigkeit eines Ableitwiderstandes von kleiner 1 GΩ für ATEX-Beschichtungen verknüpfen.

Völlig überraschend und für den Fachmann nicht vorherzusehen, war, dass die gemessenen Leitwerte keine praktische Korrelation mit der Anzahl der Schichten und der gemessenen Schichtdicke zeigen.

Sie lagen bei allen Zusammensetzungen, entsprechend der erfindungsgemäß vorgeschlagenen Lösungen weit unterhalb der vorgegebenen maximal zulässigen Widerstände der ATEX-Norm von 1000 MΩ oder 1 GΩ. Sie betrugen teilweise nur 1/500 bis 1/100 des maximal zulässigen Widerstandswertes, wie sich aus der nachfolgenden Tabelle ergibt.

| | | | | | | | | | |
|---|---|---|---|---|---|---|---|---|---|
| **Systeme nach ATEX** | DFT (µm) | DFT (µm) | DFT (µm) | DFT (µm) | DFT (µm) | DFT (µm) | DFT (µm) | DFT (µm) | DFT (µm) |
| GB (2K-EP-Zinkstaub) | 70 | 70 | 70 | 90 | 90 | 90 | 70 | 70 | 70 |
| ZB (2K-EP-Eisenglimmer) | 110 | 110 | 110 | 130 | 130 | 130 | 80 | 80 | 80 |
| DB (2K-PUR Deck ATEX) | 40 | 60 | 120 | 40 | 60 | 120 | 60 | 80 | 100 |
| Σ (DFT) | 220 | 240 | 300 | 260 | 280 | 340 | 210 | 230 | 250 |
| Leitwert (MΩ) | 3,6 | 3,4 | 2,9 | 6,1 | 5,3 | 4 | 4,1 | 4,8 | 7,3 |
| | | | | | | | | | |
| | | | | | | | | | |
| GB (2K-EP-Zinkphosphat Rez 1) | 80 | 80 | 80 | 90 | 90 | 90 | 100 | 100 | 100 |
| ZB (2K-EP-Eisenglimmer) | 110 | 110 | 110 | 130 | 130 | 130 | 80 | 80 | 80 |
| DB (2K-PUR Deck ATEX) | 40 | 60 | 120 | 40 | 60 | 120 | 60 | 80 | 100 |
| Σ (DFT) | 230 | 250 | 310 | 260 | 280 | 340 | 240 | 260 | 280 |
| Leitwert (MΩ) | 5,8 | 11,1 | 10,3 | 6,4 | 4,8 | 9,4 | 5,5 | 4,6 | 8,3 |
| | | | | | | | | | |
| | | | | | | | | | |
| GB (2K-EP-Zinkphosphat Rez. 2) | 80 | 80 | 80 | 90 | 90 | 90 | 100 | 100 | 100 |
| ZB (2K-EP-Eisenglimmer) | 80 | 80 | 80 | 130 | 130 | 130 | 80 | 80 | 80 |
| ZB (2K-EP-Eisenglimmer) | 80 | 80 | 80 | 80 | 80 | 120 | 60 | 80 | 100 |
| DB (2K-PUR Deck ATEX) | 40 | 60 | 100 | 60 | 90 | 120 | 60 | 80 | 100 |
| Σ (DFT) | 280 | 300 | 340 | 360 | 390 | 460 | 300 | 340 | 380 |
| Leitwert (MΩ) | 8,2 | 6,2 | 7,6 | 5,3 | 5,7 | 6,1 | 3,4 | 2,6 | 10,2 |
| | | | | | | | | | |

Dies war umso mehr überraschend, da für den Fachmann bekanntermaßen Beschichtungen und ihre Grenzflächen an und für sich Isolatoren darstellen und die gemessenen Leitwerte eine Summe aus Oberflächenwiderstand und Durchgangswiderstand sind.

Insbesondere bei höheren Schichtdicken, wie dies vorliegend im Bereich von 200 µm bis 400 µm der Fall ist, schwimmen die Bindemittel oft auf, so dass die Zusatzmittel zumindest an der Oberfläche in geringerer Konzentration vorliegen sollten und somit die Widerstände stark ansteigen würden. Die war offensichtlich aber durchgängig nicht der Fall.

Der Fachmann konnte erwarten, dass sich zumindest eine mittlere Abhängigkeit der Leitwerte von der Schichtdicke, bzw. der Anzahl von Schichten zeigt. Dies hatte sich jedoch so nicht bewahrheitet.

Die erfindungsgemäße Lösung bewirkt in vorteilhafter Weise, dass dadurch überhaupt die praktische Durchführung von Korrosionsschutzarbeiten auf Baustellen und werksseitig erfolgen kann, da hier Schichtdickentoleranzen unvermeidbar sind. Nur durch die aufgetretene Toleranz kann hier sicher im Rahmen der ATEX gearbeitet werden, ohne dass man befürchten muss, dass schon kleinere Schichtdickenänderungen zu großen Verschiebungen bei den Leitwerten führen.

Die Erfindung wird nachfolgend an Hand mehrerer Ausführungsbeispiele näher erläutert.
**(a)** In einer bevorzugten Ausführung der Erfindung setzt sich das Lacksystem aus einer Grundbeschichtung auf der Basis 2K-Epoxidharz, einer Zwischenbeschichtung auf der Basis 2K-Epoxidharz und einer Deckbeschichtung der Basis 2KPolyurethanharz zusammen.
   Der Anteil an Bindemittel auf Basis 2K-Epoxidharz beträgt in der Grundbeschichtung 12, in der Zwischenbeschichtung auf Basis 2K-Epoxidharz 23 und in der Deckbe*schichtung der Basis 2K-Polyurethanharz* 25.
   In der Grundbeschichtung sind 45 Anteile Zinkpigment, Eisenglimmer mit 13 Anteilen sowie Bariumsulfat mit 10 Anteilen enthalten.
   Die Zwischenbeschichtung weist keine Zinkpigmentanteile auf. Eisenglimmer ist mit 40 Anteilen sowie Bariumsulfat mit 10 Anteilen vertreten.
   Farbgebende Pigmente finden sich zu 2 Teilen in der Zwischenschicht und zu 10 Teilen in der Deckbeschichtung.
   Unlösliches, transparentes, leitfähiges Pigment ist allein in der Deckbeschichtung zu 25 Teilen vertreten.
   Lösemittel werden der Grundbeschichtung zu 20 Teilen, der Zwischenbeschichtung zu 25 Teilen und der Deckbeschichtung zu 30 Teilen zugesetzt.
   In dieser Zusammensetzung betragen die Schichtdicken (DFT) in der Grundbeschichtung 80 µm, der Zwischenbeschichtung 100 µm und der Deckbeschichtung 60 µm.
   Die Gesamtschichtdicke (DFT)beträgt in diesem Ausführungsbeispiel 240 µm.
**(b)** Bei einem weiteren Ausführungsbeispiel der Erfindung setzt sich das Lacksystem aus einer Grundbeschichtung auf Basis 1 K- Polyurethanharz, die Zwischenbeschichtung auf Basis 1 K-Polyurethanharz und die Deckbeschichtung auf Basis 2K-Polyurethanharz zusammen.
   Der Anteil an Bindemittel auf Basis 1 K- Polyurethanharz beträgt in der Grundbeschichtung 18 Teile, in der Zwischenbeschichtung auf Basis 1 K- Polyurethanharz 20 Teile und in der Deckbeschichtung auf der Basis 2K-Polyurethanharz 35 Teile.
   In der Grundbeschichtung sind Eisenglimmer mit 30 Teilen, Bariumsulfat mit 15 Teilen sowie 10 Teile Omyacarb enthalten.
   Die Zwischenbeschichtung enthält Eisenglimmer mit 40 Teilen und Bariumsulfat mit 10 Teilen.
   Bariumsulfat ist in der Deckbeschichtung mit 5 Teilen vertreten.
   Farbgebende Pigmente finden sich zu 7 Teilen in der Grundbeschichtung, zu 2 Teilen in der Zwischenbeschichtung und zu 15 Teilen in der Deckbeschichtung.
   Unlösliches, transparentes, leitfähiges Pigment ist in der Deckbeschichtung zu 15 Teilen vertreten.
   Lösemittel werden der Grundbeschichtung zu 30 Teilen, der Zwischenbeschichtung zu 35 Teilen und der Deckbeschichtung zu 30 Teilen zugesetzt.
   In dieser Zusammensetzung betragen die Schichtdicken (DFT) in der Grundbeschichtung 120 µm, der Zwischenbeschichtung 180 µm und der Deckbeschichtung 60 µm.
   Die Gesamtschichtdicke (DFT) beträgt in diesem Ausführungsbeispiel 360 µm.
   Die Erfindung ermöglicht, entsprechend den in den Unteransprüchen genannten Lösungen, eine Reihe weiterer sehr vorteilhafter Kombinationen, deren Ausführungsformen, die erfindungsgemäße Aufgabenstellung in besonderer Weise lösen.
   Bei den in den nachfolgend ausgeführten Ausführungsbeispielen aufgezeigten Mischungssystemen wird von einer jeweils gleichen Zusammensetzung der Bindemittel ausgegangen.
**(c)** So ergeben sich bei einer Bindemittel Zusammensetzung von 12 Teilen in der Grund-, 23 Teilen in der Zwischen- und 25 Teilen in der Deckbeschichtung folgende Mischungskombinationen mit herausragenden Eigenschaften.
**(c1)** In einer ersten Variante enthält die Grundbeschichtung 45 Teile Zinkpigment, 13 Teile Eisenglimmer und 10 Teile Bariumsulfat bei einem Lösemittelanteil von 20 Teilen.
   Die Schichtdicke (DFT) beträgt dabei 80 µm.
   Die Zwischenbeschichtung enthält 40 Teile Eisenglimmer, 10 Teile Bariumsulfat und 2 Teile farbgebende Pigmente bei einem Lösemittelanteil von 25 Teilen.
   Die Schichtdicke (DFT) beträgt dabei 100 µm.
   Die Deckbeschichtung enthält 5 Teile Bariumsulfat, 10 Teile farbgebende Pigmente sowie 25 Teile sphärisch leitfähige Pigmente und 5 Teile plättchenförmige, leitfähige Pigmente bei einem Lösemittelanteil von 25 Teilen.
   Die Schichtdicke (DFT) beträgt 60 µm.
   Die Gesamtschichtdicke (DFT) aller drei Schichten beträgt 240 µm.
**(c2)** In einer zweiten Variante, bei dieser Zusammensetzung an Bindemitteln in den Schichten, enthält die Grundbeschichtung wiederum 45 Teile Zinkpigment, 13 Teile Eisenglimmer und 10 Teile Bariumsulfat bei einem Lösemittelanteil von 20 Teilen.
   Die Schichtdicke (DFT) beträgt ebenso 80 µm.
   Die Zwischenbeschichtung enthält gleichfalls 40 Teile Eisenglimmer, 10 Teile Bariumsulfat und 2 Teile farbgebende Pigmente bei einem Lösemittelanteil von 25 Teile.
   Die Schichtdicke (DFT) beträgt dabei wie in der ersten Variante ebenfalls 100 µm.
   Die Deckbeschichtung enthält 5 Teile Bariumsulfat, 10 Teile farbgebende Pigmente sowie 20 Teile sphärisch leitfähige Pigmente und 10 Teile leitfähige Keramikflakes bei einem Lösemittelanteil von 30 Teilen.
   Die Schichtdicke (DFT) beträgt 60 µm, die Gesamtschichtdicke (DFT aller drei Schichten 240 µm.
**(c3)** Bei einer dritten Variante in dieser Zusammensetzung an Bindemitteln in den Schichten, enthält die Grundbeschichtung wiederum 45 Teile Zinkpigment, 13 Teile Eisenglimmer und 10 Teile Bariumsulfat bei einem Lösemittelanteil von 20 Teilen. Die Schichtdicke (DFT) beträgt wiederum 80 µm.
   Die Zwischenbeschichtung enthält gleichfalls 40 Teile Eisenglimmer, 10 Teile Bariumsulfat und 2 Teile farbgebende Pigmente bei einem Lösemittelanteil von 25 Teilen.
   Die Schichtdicke (DFT) beträgt dabei wie in der ersten und zweiten Variante ebenfalls 100 µm.
   Die Deckbeschichtung enthält 10 Teile Bariumsulfat, 10 Teile farbgebende Pigmente sowie 30 Teile dotierte, leitfähige Glimmerpigmente bei einem Lösemittelanteil von 30 Teilen.
   Die Schichtdicke (DFT) beläuft sich auf 60 µm.
   Die Gesamtschichtdicke (DFT) aller drei Schichten beträgt 240 µm.
**(d)** Bei einer weiteren Mischungskombinationen, die zu Systemen mit besonders guten Eigenschaften führen, werden die Bindemittel in einer Zusammensetzung von 18 Teilen in der Grund-, 20 Teilen in der Zwischen- und 35 Teilen in der Deckbeschichtung verwendet.
**(d1)** In einer ersten Variante davon enthält die Grundbeschichtung 30 Teile Eisenglimmer, 15 Teile Bariumsulfat und 10 Teile Omyacarb, sowie 7 Teile farbgebende Pigmente, bei einem Lösemittelanteil von 30 Teilen.
   Die Schichtdicke (DFT) beträgt 80 µm.
   Die Zwischenbeschichtung enthält 40 Teile Esenglimmer, 10 Teile Bariumsulfat und 2 Teile farbgebende Pigmente bei einem Lösemittelanteil von 35 Teilen.
   Die Schichtdicke (DFT) beträgt 180 µm.
   Die Deckbeschichtung enthält 15 Teile farbgebende Pigmente sowie 15 Teile sphärisch leitfähige Pigmente und 15 Teile plättchenförmige, leitfähige Pigmente bei einem Lösemittelanteil von 30 Teilen.
   Die Schichtdicke (DFT) beträgt dabei 60 µm, die Gesamtschichtdicke (DFT)aller drei Schichten 360 µm.
**(d2)** In einer zweiten Variante dieser Zusammensetzung an Bindemitteln in den Schichten enthält die Grundbeschichtung wiederum 30 Teile Eisenglimmer, 15 Teile Bariumsulfat und 10 Teile Omyacarb sowie 7 Teile farbgebende Pigmente bei einem Lösemittelanteil von 30 Teilen.
   Die Schichtdicke (DFT) beträgt ebenso 35 µm.
   Die Zwischenbeschichtung enthält gleichfalls 40 Teile Eisenglimmer, 10 Teile Bariumsulfat und 2 Teile farbgebende Pigmente bei einem Lösemittelanteil von 35 Teilen.
   Die Schichtdicke (DFT) kommt, wie in der ersten Variante, ebenfalls auf 180 µm.
   Die Deckbeschichtung enthält 15 Teile farbgebende Pigmente sowie 10 Teile sphärisch leitfähige Pigmente und 20 Teile leitfähige Keramikflakes bei einem Lösemittelanteil von 20 Teilen.
   Die Schichtdicke (DFT) beträgt 60 µm.
   Die Gesamtschichtdicke (DFT) aller drei Schichten beläuft sich wiederum auf 360 µm.
**(d3)** Bei einer dritten Variante in dieser Zusammensetzung an Bindemitteln in den Schichten enthält die Grundbeschichtung wiederum 30 Teile Eisenglimmer, 15 Teile Bariumsulfat und 10 Teile Omyacarb sowie 7 Teile farbgebende Pigmente bei einem Lösemittelanteil von 30 Teilen.
   Die Schichtdicke (DFT) dieser Schicht beträgt ebenso 120 µm.
   Die Zwischenbeschichtung enthält gleichfalls 40 Teile Eisenglimmer, 10 Teile Bariumsulfat und 2 Teile farbgebende Pigmente bei einem Lösemittelanteil von 35 Teilen.
   Die Schichtdicke (DFT) beläuft sich dabei wie in der ersten und zweiten Variante ebenfalls auf 180 µm.
   Die Deckbeschichtung enthält 15 Teile farbgebende Pigmente sowie 10 Teile dotierte, leitfähige Glimmerpigmente und 20 Teile leitfähige Keramikflakes bei einem Lösemittelanteil von 25 Teilen.
   Die Schichtdicke (DFT) beträgt wiederum 60 µm, die Gesamtschichtdicke (DFT) aller drei Schichten 360 µm.

## Patentansprüche

1. Lacksystem für explosionsgefährdete Bereiche und Bereiche hoher korrosiver Belastung, insbesondere für Anlagen oder Anlagenteile der Öl- und Gasindustrie, mit einer definierten Schichtfolge aus drei Einzelschichten, einer Grundbeschichtung, einer Zwischenbeschichtung und einer Deckbeschichtung, jeweils auf Basis von 2K-Epoxidharz oder 1 K- bzw. 2K Polyacrylatharz/ Polyisocyanat (1K- bzw. 2K-PUR) oder Alkydharz oder Acrylharz- oder Vinylgruppenhaltigen Polymeren oder beliebigen Kombinationen von Alkydharzen oder Acrylharzen oder Vinylgruppenhaltigen Polymeren, **dadurch gekennzeichnet, dass** die Grundbeschichtung und die Zwischenbeschichtung jeweils leitfähige Pigmente, die Deckbeschichtung unlösliche, transparente, leitfähige Pigmente enthält und die Gesamtschichtdicke der drei Einzelschichten 200 µm bis 400 µm, bei einem Oberflächenwiderstand unter 1 GΩ, beträgt.

2. Lacksystem für explosionsgefährdete Bereiche und Bereiche hoher korrosiver Belastung nach Anspruch 1, **dadurch gekennzeichnet, dass** die Grundbeschichtung mit leitfähigen Pigmenten wie Zinkstaub, Eisenglimmer, Aluminium und /oder zusätzlich mit Zinkphosphat, Zinkphosphat/Calciumphosphat, Calciumphosphat/ Strontiumphosphat oder Calciumphosphat/Zinkphosphat/Zinkoxid oder Kombinationen aus diesen sowie Füllstoffen, wie Bariumsulfat, Talkum oder Kombinationen aus diesen, versetzt ist.

3. Lacksystem für explosionsgefahrdete Bereiche und Bereiche hoher korrosiver Belastung nach Anspruch 1, **dadurch gekennzeichnet, dass** die Zwischenbeschichtung mit leitfähigen Pigmenten wie Eisenglimmer, Aluminium und/oder Mica Glimmer sowie Füllstoffen, wie Bariumsulfat. Talkum oder Kombinationen aus diesen, versetzt ist.

4. Lacksystem für explosionsgefährdete Bereiche und Bereiche hoher korrosiver Belastung nach Anspruch 1, **dadurch gekennzeichnet, dass** die Deckbeschichtung mit unlöslichen, transparenten und leitfähigen Pigmenten versetzt ist, die aus einem Substrat und einer elektrisch leitfähigen Schicht bestehen.

5. Lacksystem für explosionsgefährdete Bereiche und Bereiche hoher korrosiver Belastung nach Anspruch 1 und 4, **dadurch gekennzeichnet, dass** das Substrat aus plättchenförmigen Partikeln, sphärischen Partikel oder deren Gemischen besteht.

6. Lacksystem für explosionsgefährdete Bereiche und Bereiche hoher korrosiver Belastung nach Anspruch 1 und 4, **dadurch gekennzeichnet, dass** das plättchenförmiges Substrat aus Glimmer, synthetischem Glimmer, SiO2- Glas- oder Keramikflakes oder einem Perlglanzpigment besteht.

7. Lacksystem für explosionsgefährdete Bereiche und Bereiche hoher korrosiver Belastung nach Anspruch 1 und 4, **dadurch gekennzeichnet, dass** das Substrat aus sphärischen Partikeln aus Al2O3-, BaSO4- oder SiO2-Partikeln besteht.

8. Lacksystem für explosionsgefährdete Bereiche und Bereiche hoher korrosiver Belastung nach Anspruch 1, 4 und 6, **dadurch gekennzeichnet, dass** das Pigment aus Glimmer, optional beschichtet mit einer Metalloxidschicht, vorzugsweise eine TiO2Beschichtung, die mit einer mit Antimon dotierten Zinnoxid-Schicht [(Sn,Sb)O2] belegt sind, besteht.

9. Lacksystem für explosionsgefährdete Bereiche und Bereiche hoher korrosiver Belastung nach Anspruch 1 und 4, **dadurch gekennzeichnet, dass** der Gehalt an Pigmenten in der Deckbeschichtung bezogen auf die Gesamtformulierung zwischen 2- 40 Gewichts- % liegt.

10. Lacksystem für explosionsgefährdete Bereiche und Bereiche hoher korrosiver Belastung nach Anspruch 1, **dadurch gekennzeichnet, dass** die Grund-, Zwischen- und Deckbeschichtung als Bindemittel jeweils PVC- Copolymere, 2 K -Epoxidharz, 1 K-PUR-Harz und 2-K PUR-Harz enthält.

11. Lacksystem für explosionsgefährdete Bereiche und Bereiche hoher korrosiver Belastung nach Anspruch 1, **dadurch gekennzeichnet, dass** die Deckbeschichtung aus einem 1 K-PUR Beschichtungsstoff mit aliphatischen bzw. aromatischen Isocyanaten oder einem 2K-PUR Beschichtungsstoff oder einem 1K-modifizierten Acrylharzbeschichtungsstoff besteht und transparente, leitfähige und unlösliche Pigmente enthält.

## Claims

1. Coating system for explosion hazard areas and areas with high corrosive exposure, especially for plants or plant components of the oil and gas industry, with a defined coat sequence from three single coats, one primer coat, one intermediate coat and one top coat, each on the basis of 2-component epoxy resin or 1-component or 2-component polyacrylate resin/ polyisocyanate (1-component or 2-component PUR) or alkyd resin or acrylic resin- or vinyl group-containing polymers or any combination of alkyd resins or acrylic resins or vinyl group-containing polymers, **characterised in that** the primer coat and the intermediate coat each contain conductive pigments the top coat contains insoluble, transparent conductive pigments and the total coating thickness of the three individual coats is 200 µm to 400 µm, at a surface resistance under 1 GΩ.

2. Coating system for explosion hazard areas and areas with high corrosive exposure according to claim 1, **characterised in that** the primer coat contains additives from conductive pigments such as zinc dust, micaceous iron ore, aluminium and/or in addition with zinc phosphate, zinc phosphate/calcium phosphate, calcium phosphate/strontium phosphate or calcium phosphate/zinc phosphate/zinc oxide or combinations from these as well as fillers such as barium sulphate, talc or combinations from these.

3. Coating system for explosion hazard areas and areas with high corrosive exposure according to claim 1, **characterised in that** the intermediate coat contains additives from conductive pigments such as micaceous iron ore, aluminium and/or mica as well as fillers such as barium sulphate, talk or combinations from these.

4. Coating system for explosion hazard areas and areas with high corrosive exposure according to claim 1, **characterised in that** the top coat contains insoluble, transparent and conductive pigments consisting of a substrate or electrically conductive coat.

5. Coating system for explosion hazard areas and areas with high corrosive exposure according to claims 1 and 4, **characterised in that** the substrate consists of platelet-type particles, spherical particles or a mixture of them.

6. Coating system for explosion hazard areas and areas with high corrosive exposure according to claims 1 and 4, **characterised in that** the platelet-type substrate consist of mica, synthetic mica, SiO2 glass or ceramic flakes or a pearlescent pigment.

7. Coating system for explosion hazard areas and areas with high corrosive exposure according to claims 1 and 4, **characterised in that** the substrate consists of spherical particles from Al2O3, BaSO4 or SiO2 particles.

8. Coating system for explosion hazard areas and areas with high corrosive exposure according to claims 1 and 4 and 6, **characterised in that** the pigment consists of mica, optionally coated with a metal oxide coat, preferable a TiO2 coat covered with an antimony-doped tin oxide coat [(Sn,Sb)O2].

9. Coating system for explosion hazard areas and areas with high corrosive exposure according to claims 1 and 4, **characterised in that** the content of pigments in the top coat in relationship to the overall formulation lies between 2-40 weight percent.

10. Coating system for explosion hazard areas and areas with high corrosive exposure according to claim 1, **characterised in that** the primer, intermediate and top coat each contains PVC copolymer, 2-component epoxy resin, 1-component PUR resin and 2-component PUR resin as binder.

11. Coating system for explosion hazard areas and areas with high corrosive exposure according to claim 1, **characterised in that** the top coat consists of a 1-component PUR coating material with aliphatic or aromatic isocyanates or a 2-component PUR coating material or a 1-component modified acrylic resin coating material and contains transparent, conductive and insoluble pigments.

## Revendications

1. Système de peinture pour les atmosphères explosibles et les zones avec une charge corrosive élevée, notamment pour les installations ou les composants d'installations de l'industrie du pétrole et du gaz, avec une suite de couches définies composée de trois couches individuelles, une couche primaire, une couche intermédiaire et une couche de finition, respectivement sur la base de résine époxyde 2K ou 1 K voire d'une résine de polyacryle 2K/de polyisocyanate (1 K ou 2K-PUR) ou de résine d'alkyde ou de résine acrylique ou de polymères contenant des groupes vinyles ou de toutes combinaisons de résine d'alkyde ou de résines acryliques ou de polymères contenant des groupes vinyles, **caractérisé par le fait que** la couche primaire et la couche intermédiaire contiennent chacune des pigments conducteurs, et que la couche de finition contient des pigments insolubles, transparents et conducteurs et que l'épaisseur totale des des trois couches individuelles se situe entre 200 µm et 400 µm, pour une résistance en surface inférieure à 1 GΩ.

2. Système de peinture pour les atmosphères explosibles et les zones avec une charge corrosive élevée selon la revendication 1, **caractérisé par le fait que** la couche primaire contient des pigments conducteurs tels que la poudre de zinc, l'oxyde de fer micacé, l'aluminium et/ou, par ailleurs, du phosphate de zinc, du phosphate de zinc/calcium, du phosphate de calcium/strontium ou du phosphate de calcium/zink/oxyde de zinc ou des combinaisons à base de substances de charge tels que du sulfate de baryum, du talc ou des combinaisons de ces substances.

3. Système de peinture pour les atmosphères explosibles et les zones avec une charge corrosive élevée selon la revendication 1, **caractérisé par le fait que** la couche intermédiaire contient des pigments conducteurs tels que l'oxyde de fer micacé, l'aluminium et/ou du mica ainsi que des substances de charge, tels que du sulfate de baryum, du talc ou des combinaisons de ces substances.

4. Système de peinture pour les atmosphères explosibles et les zones avec une charge corrosive élevée selon la revendication 1, repéré par le fait que la couche de finition contient des pigments insolubles, transparents et conducteurs composés d'un substrat et d'une couche électroconductrice.

5. Système de peinture pour les atmosphères explosibles et les zones avec une charge corrosive élevée selon les revendications 1 et 4, **caractérisé par le fait que** le substrat se compose de particules en forme de plaquettes, sphériques ou d'autres mélanges.

6. Système de peinture pour les atmosphères explosibles et les zones avec une charge corrosive élevée selon les revendications 1 et 4, **caractérisé par le fait que** le substrat en forme de plaquettes se compose de mica, de mica synthétique, de flocons de verre SiO2 ou de céramique ou d'un pigment brillant nacré.

7. Système de peinture pour les atmosphères explosibles et les zones avec une charge corrosive élevée selon les revendications 1 et 4, **caractérisé par le fait que** le substrat se compose de particules sphériques à base de particules Al2O3, BaSO4 ou SiO2.

8. Système de peinture pour les atmosphères explosibles et les zones avec une charge corrosive élevée selon les revendications 1, 4 et 6, **caractérisé par le fait que** le pigment se compose de mica, avec un revêtement optionnel d'une couche d'oxyde métallique, de préférence un revêtement TiO2, qui est recouverte d'une couche d'oxyde d'étain dopé à l'antimoine ([(Sn,Sb)O2].

9. Système de peinture pour les atmosphères explosibles et les zones avec une charge corrosive élevée selon les revendications 1 et 4, **caractérisé par le fait que** la teneur en pigments dans la couche de finition se situe entre 2 et 40 % du poids par rapport à la formulation totale.

10. Système de peinture pour les atmosphères explosibles et les zones avec une charge corrosive élevée selon la revendication 1, **caractérisé par le fait que** les couches primaire, intermédiaire et de finition contiennent comme liant respectivement des copolymères PVC, de la résine époxyde 2K, de la résine 1 K-PUR et 2K-PUR.

11. Système de peinture pour les atmosphères explosibles et les zones avec une charge corrosive élevée selon la revendication 1, **caractérisé par le fait que** la couche de finition se compose d'un produit de revêtement 1 K-PUR avec des isocyanates aliphatiques ou aromatiques ou d'un produit de revêtement 2K-PUR ou d'un produit de revêtement modifié 1 K à base de résine acrylique et qu'elle contient des pigments transparents, conducteurs et insolubles.
